# EUROPEAN PATENT SPECIFICATION

(11) **EP 2 699 786 B1**
(45) Date of publication and mention of the grant of the patent: **09.09.2015**
(21) Application number: 12717866.3
(22) Date of filing: 28.03.2012
(51) Int. Cl.: F02M 27/04

(54) **METHOD FOR OPTIMIZING COMBUSTION ENGINES**
VERFAHREN ZUR OPTIMIERUNG VON BRENNKRAFTMASCHINEN
PROCÉDÉ D'OPTIMISATION DE MOTEURS À COMBUSTION

(30) Priority: 19.04.2011 IT RM20110198
(43) Date of publication of application: 26.02.2014
(73) Proprietor: Titano S.R.L., 80122 Napoli (NA) (IT)
(72) Inventor: BOVE, Fabrizio, 80127 Napoli (NA) (IT); BOVE, Alessandro, 80127 Napoli (NA) (IT)
(74) Representative: Fiammenghi, Eva
(86) International application number: PCT/IB2012/051484
(87) International publication number: WO 2012/143804

(56) References cited:
- WO-A1-2007/145409
- DE-U1-202006 014 687
- FR-A1- 2 913 068

## Description

### Field of the invention

The present invention intends to describe an innovative integrated system for the magnetization of the fuel and of the entire engine itself, characterized by the presence of multiple components constituted by a multiplicity of single elements suitably arranged both in the tank and around any one internal combustion engine for improving the efficiency thereof, decreasing fuel consumptions and reducing the polluting impact thereof.

### Prior art

For some time, especially since the early 1960s, it has been known that magnetism exerts a positive effect on the efficiency of internal combustion engines. Magnetism's effect on combustion has also been quite frequently recognized in recent academic research and has been distinguished into two different use types: patents of magnetic devices installed on engine feed tubes, and patents of magnetic devices for immersion in the fuel tank. A decidedly positive effect, as shown in the U.S. patents US 4572145 of 1986, US 5048489 of 1991, US 5124045 of 1992, in the German patent DE 44171676 and in the patent WO 00/06888 of 2000, and FR 2 913 068 A1, DE 20 2006 014687 U1 and WO 2007/145 409 A1 . Up to now, however, all of the filed patents have exclusively regarded devices adapted to irradiate with magnetic fields only the fed fuel, independent of what this is, and the air. The present invention instead intends to describe and claim an innovative integrated system for the magnetization of the fuel, of the liquid for cooling the engine and of the air, characterized by the presence of a multiplicity of single and compound elements, suitably arranged in one or more perforated containers in the fuel tank and around the internal combustion engine to be fed, characterized in that all are simultaneously activated in a manner so as to work synergistically, and thus magnetizing the engine as well. The present invention intends to describe and claim the innovation of the joint use of said devices (possibly repeated multiple times) as a function of the power supplied by the engine.

Six devices are described in the present patent application, and their magnetic power and size varies in a manner directly proportional to the increase of the power of the engine on which they are installed.

The present invention intends to describe and claim the innovation in the method for shielding and coupling the magnets employed therein for further increasing the power of the integrated system, object of the patent, and for better adapting the engine to be treated in a manner so as to increase the performances thereof in terms of power, decreasing the fuel consumptions and the polluting emissions.

The present patent application intends to describe and claim the innovation introduced by means of the present method for the modular assembly - on the fuel duct, inside the immersion container or containers situated in the fuel tank, on the cooling duct and on the air feed duct - of a plurality of magnets adapted to create a charge of opposite sign between the fuel and the air the feeds the engine. The patent WO 00/06888 better describes the current state of the art, claiming however only one container made of perforated plate, containing several permanent magnets made of neodymium and samarium cobalt; enclosed in suitable containers and spacers, such magnets reduce the breakage and structural yielding of the container. The present invention intends to go beyond the current state of the art, describing an integrated magnetization system characterized by the presence of multiple magnetic devices, adapted to give rise to an opposite charge between the fuel - independent of what this is - and the air feeding the combustion chamber of any one internal combustion engine. In the obtainment of this result, the engine itself is charged with a charge analogous to that of the fuel and of course with sign opposite that of the air feeding the combustion chamber. The present invention introduces a new integrated method for treating the fuel to feed to any one internal combustion engine, a new system for treating the air to feed to said engine together with a new system for treating the coolant liquid. All the aforesaid treatments must be well-combined and optimized, allowing the creation of a change of the molecular organization of the complex hydrocarbons contained in the fuel by simplifying their molecular complexity and by magnetizing the fuel and the air inserted in the engine with charges of opposite sign. Said hydrocarbons, when they are subjected to the magnetic fields organized according to the technique of the present invention, both via direct contact and via irradiation, undergo the fragmentation of the asphaltenes and the long-chain carbon compounds, which are decomposed into simple, stereochemically less bulky molecules that are therefore more easily miscible with the oxygen of the air, in order to obtain the optimal air-fuel mixture in the cylinder before combustion. The device, object of the present invention, allows improving the quality of the fuel by considerably decreasing and dispersing both the asphaltenes and the carbon compounds in a manner so as to lower the viscosity index of the treated fuel, improving its chemical-physical characteristics at the time of combustion, without however negatively affecting or modifying the life of the internal combustion engines on which said apparatus is installed. The present patent application therefore describes an innovative method for improving the quality of the fuel, reducing and optimizing the viscosity of any one fuel in order to obtain an improved spraying thereof inside the combustion chamber. Said improved spraying allows obtaining the optimization in the combustion of the fuel itself, with consequent improved performance of the engine and consequent reduction of the consumption; at the same time, the harmful emission, the particulate and the smokiness in general are reduced. In addition, the internal combustion engine, on which the present method for treating the air-fuel mixture is installed, claims an improved functioning uniformity, less maintenance and greater quietness.

### Description of the invention

The present invention is actuated due to the use of an integrated system for the magnetization of the engine, of the fuel, of the air and of the cooling water of said internal combustion engine, constituted by six different devices which by synergistically operating allow the internal combustion engine (on which they are installed) to substantially increase the optimization of the combustion and consequently the performance efficiency, simultaneously decreasing the harmful emissions and emitted fumes.

### Detailed description of the figures

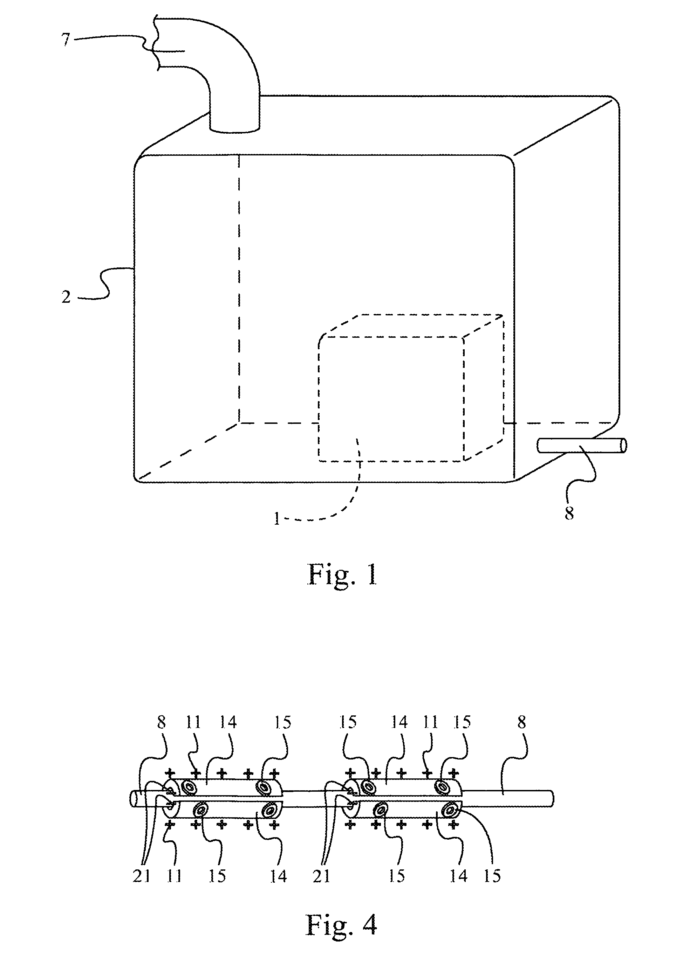

Figure 1 shows an immersion container 1 placed inside the fuel tank 2. It is observed that the immersion container 1 is placed in proximity to the fuel outlet duct 8 in a manner so as to fully magnetize the fuel before it enters into the duct 8.

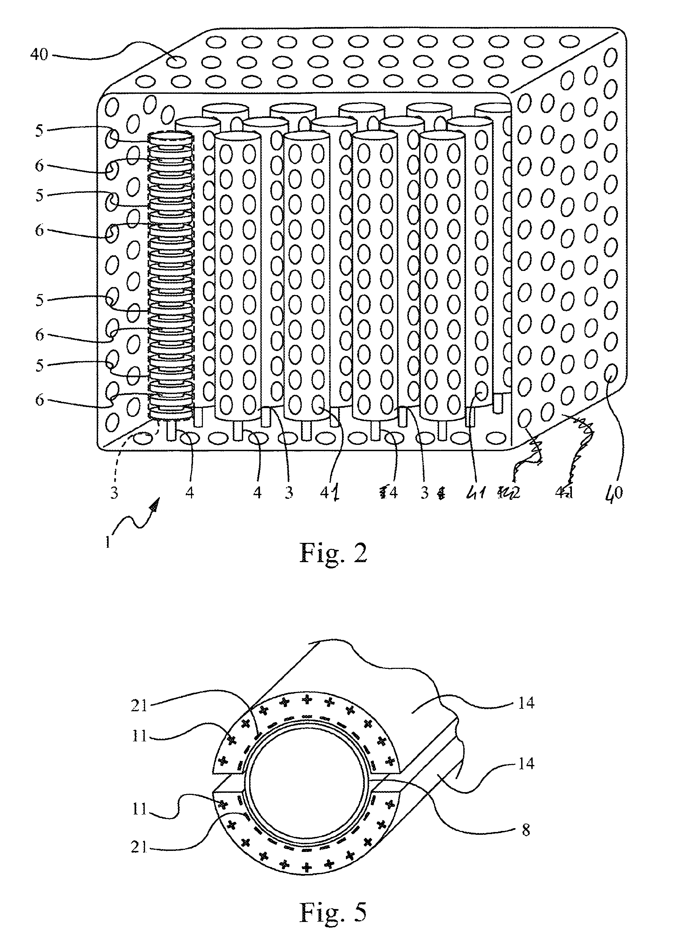

Figure 2 shows the immersion container 1 inside of which - in addition to the fuel that flows through the holes 40 - a plurality of solid, cylindrical perforated containers 3 are also situated; such solid containers 3 contain magnetic and paramagnetic elements 5 at their interior constituted by rare earth elements like samarium cobalt and neodymium. Said solid containers 3 are equipped with a plurality of holes 41 and are stably anchored on the bottom of the immersion container 1, placed in the fuel tank 2, by means of at least one anchorage bracket 4. The immersion container 1 is anchored with a bracket or a plurality of brackets 4 to the tank 2 interior and is positioned in a manner so as to be as close as possible to the fuel outlet duct 8. The magnetic elements 3 are obtained in the form of stacked discs 5, constituted by rare earth elements such as neodymium and samarium cobalt. Between the single magnetic discs 3, suitable ceramic spacers 6 are situated, adapted to space, stabilize and increase the magnetic field produced by the magnetic discs 5.

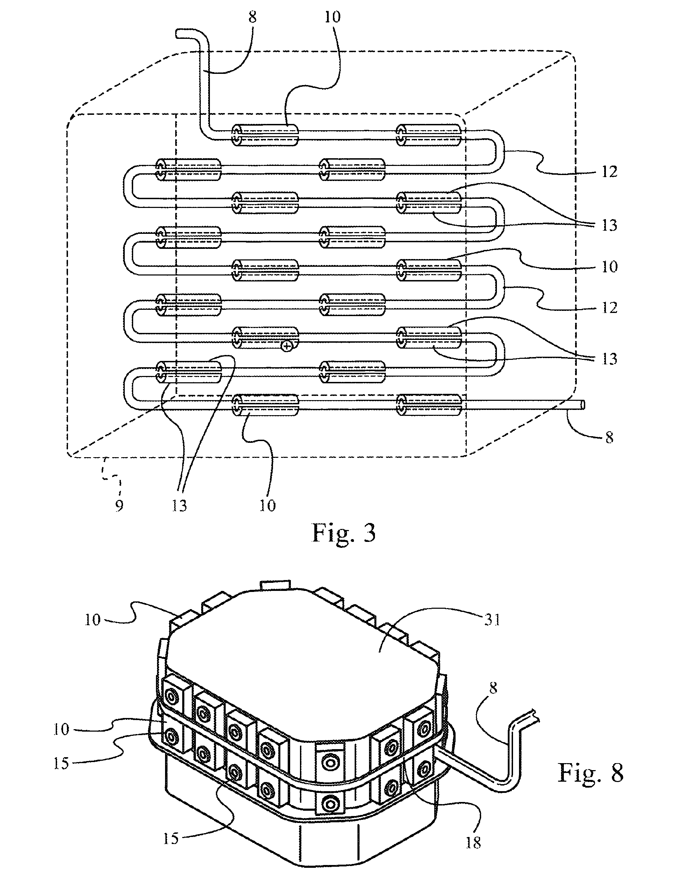

Figure 3 shows the passage container 9; the fuel duct 8 coming from the tank 2 enters into a containment structure 9, at whose interior the duct 8 executes a series of bends and/or curves 12. A coil and/or rolls are created in a manner such that a plurality of magnets 10 can be stably positioned close to said coil and/or tube conformation so as to electrically and magnetically charge the fuel that slides inside the duct 8, along the entire path.
Figure 4 shows a pair of concave magnets 14 made of ferrite or samarium cobalt, arranged around a substantially rectilinear portion of the duct 8. The magnets are adapted to further magnetize the fuel flow that slides inside the duct 8. Said magnet pairs 14 are placed between the fuel filter and the a/c pump of the engine, in any case before the injection point of the fuel in the engine's combustion chamber. On the outside, they have washers 15 made of rare earth elements such as neodymium or samarium cobalt. The assembly is externally coated with a plate of shielding material provided with at least 1 mm thickness.
Figure 5 shows a section view of the pair of concave magnets 14, in which it is observed that the charges of the same sign are situated in the same positions, inside 21 or outside 11, of each pair of magnets 14.

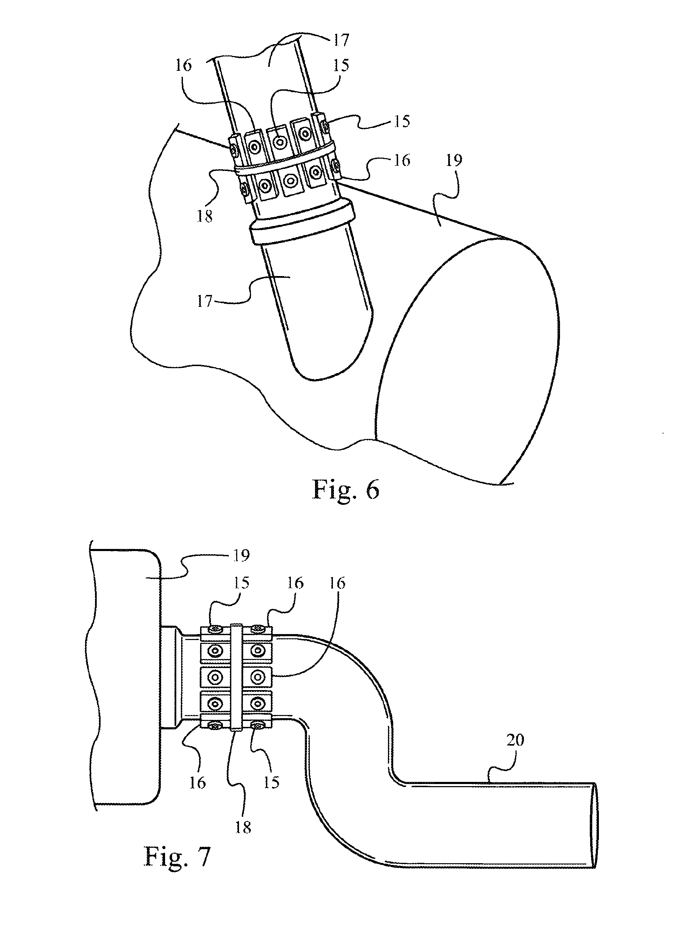

Figure 6 shows a plurality of concave magnets made of ferrite or neodymium or samarium cobalt 16, possibly covered with a pair of neodymium washers 15, radially arranged around the suction duct 17 for the air that feeds the internal combustion engine, object of the present invention. Said magnets 16 are maintained stably in contact with the outer surface of the air suction duct 17, by means of at least one seal band 18, and are coated on the outer face by any one insulating layer, with at least 1 mm thickness, for shielding the magnetic field.
Figure 7 shows the magnets 16 directly installed on the cooling duct 20 of the internal combustion engine. The number of magnets 16 present on the cooling duct 20 is equal to ten in the illustrated representation.
Figure 8 shows the magnets 10 complete with neodymium washers installed around the fuel filter 31. The seal band 18 and the fuel tube 8 are also observed.

In the present patent application, by magnet it is intended any one permanent magnet capable of creating a persistent magnetic field ranging from 0.4 Tesla to 1.49 Tesla, or a permanent magnetic capable of creating a magnetic field constituted by the sum of many persistent magnetic fields, with intensity even considerably greater than 1.49 Tesla. Therefore, in the present text, by magnet it is intended all the so-called hard permanent magnets provided with high coercitivity. The permanent magnets employed in the present invention are constituted by ferromagnetic and/or paramagnetic materials. The permanent magnets used in the present invention are made of natural magnetic minerals such as magnetite, cobalt, nickel and rare earth elements such as gadolinium or dysprosium. In addition to the aforesaid natural magnets, synthetic materials can be used such as boron, the magnets made of ceramic compounds, AlNiCo magnets, TiCoAl magnets, injection-molded magnets and flexible magnets. The magnets preferred in the present invention are those constituted by the rare earth elements, i.e. belonging to the lanthanide group which includes samarium-cobalt magnets and neodymium-iron-boron magnets.

The power of the magnets and the paramagnetic substances varies between 0.4 Tesla and 1.49 Tesla.

In order to allow a complete comprehension of the treatment method of the present invention, the six devices that are the object of the present patent application are now described in detail. These are the following:
1) The first device, defined immersion container 1, is constituted by at least one common container suitably perforated by means of a plurality of openings 40, adapted to facilitate the direct contact of the fuel itself with the magnetic elements 5 arranged inside said immersion container 1. Said immersion container 1, represented in Figures 1 and 2, must be stably positioned inside the fuel tank 2 of the internal combustion engine to be treated. There can be one said immersion container, or more than one of said containers. This depends on the power of the engine to be treated, on the capacity of tank and on the available space. In order to prevent wear and vibrations, the immersion container 1 must be fixed to the internal structure of the tank 2 with suitable welded or screwed brackets or by means of any other seal element which stably constrains it to the interior of the tank 2 itself; also to be kept under consideration is the use of the engine, the size of the tank 2 and its application on fixed land engines, airplanes, ships and boats or any land locomotion means that is moved on rail, tire or track. The immersion container 1 preferably must be placed in proximity to the fuel outlet duct 8.

Inside said immersion container/containers 1 placed in the fuel tank 2 according to the technique described in the present invention, at least one solid container 3 of any shape is situated, preferably with cylindrical shape. Preferably there are a plurality of solid cylindrical containers 3 containing a plurality of magnetic elements 5 therein, which are constituted by disc-shaped permanent magnets constituted by several rare earth elements, including those of samarium cobalt and neodymium. Between said magnetic elements 5, ceramic spacers 6 are interposed, also of discoid form, suitably spaced for increasing the magnetic effect thereof. Said preferably cylindrical solid containers 3 are in turn stably anchored to the bottom of the immersion container 1 and in order to facilitate the contact with the fuel to be magnetized, are provided with a plurality of holes 41. The anchorage occurs by means of stable locking systems 4 such as screws or brackets, in a manner so as to suitably space said preferably cylindrical solid containers 3 from each other by at least three centimeters, so as to optimize the created magnetic field. Each cylindrical solid container 3, placed inside the immersion container 1 in turn immersed inside the tank 2 in a position as close as possible to the outlet of the duct for feeding the engine (for treating most of the fuel), is obtained in a manner so as to facilitate the contact between the fuel contained inside the tank 2 and said magnetic elements 5 as much as possible. This contact is essential in order to promote the resistance and consequently the contact time between the fuel and the magnetic components 5, in a manner so as to facilitate the molecular treatment and the magnetization of the fuel itself. Said magnetic elements 5 are obtained in the form of cylindrical discs constituted by rare earth elements such as neodymium and samarium cobalt, but they can also have any other shape. Between the single magnetic discs 5, the ceramic spacers 6 are situated which are adapted to space and optimize the single magnetic fields produced by the magnetic discs 5, increasing and optimizing the overall power of the resulting magnetic field. The structure of all the aforesaid containers, the immersion container 1 and the cylindrical containers 3, can be made of any one solid material, of metal, of any one metal alloy or of any one natural or synthetic polymer material that is insoluble in the fuel contained in the tank 2. Both the cylindrical container 3 and the immersion container 1, according to the present invention, can have any shape and can be obtained in a solid structure, respectively provided with a plurality of holes 41 and 40, such structure made of any rigid material, of metal, of any one metal alloy or of any one natural or synthetic polymer that is insoluble in the fuel present in the tank 2.

The arrangement and the shape of said cylindrical containers 3 inside the immersion container 1 can naturally vary as a function of the size of the tank 2 itself, but it is necessary to have at least one immersion container 1 with at least 10 cylindrical containers 3 for each 2000 liters of fuel contained. The approximate height of each cylindrical container 3 and consequently of the immersion element 1 vary as a function of the feed flow rate and of the engine type subjected to the process of magnetization and molecular treatment according to the present invention; such height ranges from a minimum of 6 centimeters, ideal for motorcycle tanks, to well over 100 centimeters for magnetizing the tanks on board ships, and preferably the height of each cylindrical container ranges from 20 to 40 centimeters and the optimal height is about 30 centimeters. The density of the magnetic flow originated by the container, when complete with the magnetic discs 5 composed with rare earth elements and ceramic spacers 6, is on the order of 1.17 Tesla. The magnetic discs 5 are made of any one rare earth element, preferably neodymium, with a magnetic power of at least 1.17 Tesla. The immersion container or containers 1 must be placed inside the fuel tank 2 in proximity to the fuel outlet tube 8. As a non-limiting example, for an internal combustion engine with diesel cycle produced by MTU, type 396, two immersion containers are installed in the fuel tank and each has the following measurements: 26 centimeters width, 26 centimeters height, while there are twenty-four cylindrical containers 3 which have a height of 26 centimeters and a diameter of 3.6 centimeters.
2) The second device that is the object of the present invention is the passage element 9. Said passage element 9, as shown in Figure 3, is a solid structure with parallelepiped shape, in which the fuel tube 8, coming from the tank 2 of the internal combustion engine, enters by executing a series of bends and/or curves 12 in a manner so as to create a coil and/or a winding of tubes, such that a plurality of magnets 10 can be suitably and stably positioned. The coil and/or winding of tubes 12 allows electrically charging the fuel that slides inside said duct 8 for a long segment thereof The fuel that slides inside the duct 8, passing in proximity to the magnets 10 present on the coil and/or winding of tubes 12, is charged by said magnets 10 which are constituted by ferrite joined with rare earth elements such as neodymium and samarium cobalt. The fuel, already previously electrically charged, is then further magnetically treated with charges of the same sign, over the entire path. The sign of the charge provided to the fuel must be analogous to that received by the elements of the third device and the subsequent devices before being placed in contact with the air, which will instead be provided with a charge of opposite sign. Said charge is provided to the fuel by the magnetic elements 10 and independent of whether it is positive or negative, it must also have sign analogous to that present in the coolant liquid treatment device. In addition, said charge must have sign opposite that created in the device for feeding the air, described below. When the fuel reaches the end of the passage container 9, it will have passed through a dozen pairs 13 of opposite magnets. Said opposite magnets 13 have a slightly convex shape in order to increase the effectiveness of the magnetic action and to better follow the shape of the duct 8 that they must enclose. The number of said magnets 10 ranges from 8 to 30 for each passage container 9. The size of the magnets 10 is about 9 centimeters length, 3 centimeters width and 2.5 centimeters thickness for a diesel internal combustion engine of MTU 396 type.
3) The third fuel magnetization device for optimizing the performances of any one internal combustion engine according to the present invention, as shown in Figure 4, is characterized by the presence of at least one pair, preferably up to six pairs, of convex magnets made of ferrite, neodymium or samarium cobalt 14, arranged around a substantially rectilinear and/or curved portion of the fuel duct 8. Said pairs of magnets 14 are also adapted to further increase the magnetization of the fuel flow that slides inside the tube 8. Said magnet pairs 14 are placed just before or in proximity to the A/C mechanical fuel feed pump and/or in proximity to the injection point of the fuel itself in the combustion chamber of the engine. Said magnet pairs 14 are convex and made of ferrite, neodymium or samarium cobalt and have size of about 10 centimeters length, 3 centimeters width and 2.5 centimeters thickness, and must be calibrated for functioning temperatures of at least 110 centigrade. The number of magnet pairs 14 varies from 2 to 12; preferably 5 magnet pairs are installed. In addition, said magnet pairs 14 can be covered by a plurality of neodymium washers 15, adapted to further increase the created magnetic field. The induced charge, independent of whether it is positive or negative, must have the same sign as that induced in the system for cooling the engine as well as that induced in the preceding devices for feeding and treating the fuel, but it must have sign opposite that induced in the air feeding device. As a non-limiting example, there are six magnets 14 present on the third device of an engine MTU 396 and they have size equal to 9 centimeters length, 3.5 centimeters width and 2 centimeters thickness.
4) The fourth device, represented in Figure 6, of the method for treating the air-fuel mixture supplied to an internal combustion engine, is constituted by a plurality of concave magnets made of ferrite 16 (possibly covered with a pair of neodymium washers 15) arranged radially around the air suction duct 17 that feeds any one internal combustion engine. Said magnets 16 are maintained stably in contact with the outer surface of the air suction duct 17, by means of at least one seal band 18. The magnetic field created by said magnets made of neodymium ferrite or of samarium cobalt 16 will have sign opposite that with which the fuel crossing the devices 2 and 3 was charged - independent of whether the sign is positive or negative. This expedient thus allows supplying the fuel and the air fed to the internal combustion engine with opposite charge. It is this charge difference between the two components of the combustion mixture, the air and the fuel, that optimizes the combustion step and the efficiency of said integrated magnetization system, also obtaining the molecular decomposition and the reduction of the fuel viscosity. As can be inferred from the present description, the system that is the object of the present invention must be intended as a single integrated system which tends to magnetize the entire engine due to its intense magnetic field and plurality of circuits, even if such system is equipped with six different devices (which all contribute, however, to the attainment of the same end goal). The number of magnets 16 present on the air feed duct 17 approximately ranges between 4 and 40, and is preferably 20. The size of said magnets 16 is approximately equal to 10 centimeters length, 3 centimeters width and 2.5 centimeters thickness. The shape of the magnets 16 is roughly concave in order to better adhere to the suction duct 17 on which they are installed. The composition of said magnets can be ferrite with neodymium or with samarium cobalt. Said magnets 17 have a density of the minimum magnetic field of about 1.17 Tesla. For the construction of the feed duct 17, all materials capable of transmitting the magnetic field created by the magnets 16 inside said duct 17 are naturally to be preferred. The temperature that said magnets 17 must support must be at least 110 degrees; at such temperature, they must not lose their magnetization power. The position of said magnets must be as close as possible to the combustion chamber of said internal combustion engine, evaluating the temperature of the positioning place and the strength of the magnets at such temperature (which must work without losing magnetic characteristics). As a non-limiting example, for a MTU type 396 engine, forty magnets are placed on the suction ducts; the magnets have the following dimensions: 9 centimeters length, 3.5 centimeters width and 2 centimeters thickness.
5) The fifth magnetic device, represented in Figure 7, is similar to the fourth device, only that in this case the magnets 16 are directly installed on the cooling duct 20 connected to the radiator of the internal combustion engine and magnetize the water and/or the liquid of the cooling system with the same sign with which the fuel is charged, actually making the entire engine magnetically charged with a same sign that is opposite that of the air feed. The polarization sign of the water is therefore opposite that of the air fed to the engine. The number of magnets 16 presents on the cooling duct 20 approximately ranges between 4 and 40, and is preferably equal to 20. The size of said magnets 16 is approximately equal to 10 centimeters length, 3 centimeters width and 2.5 centimeters thickness. The shape of the magnets 16 is roughly concave in order to better adhere to the cooling duct 20 on which they are installed. Said magnets 16 have a density of the minimum magnetic field equal to about 1.17 Tesla. The number of the magnets 16 present on the cooling duct 20 approximately ranges between 4 and 40, and is preferably equal to 20. Said magnets 16 must be made by taking under consideration the temperature that they must support - which is at least 110 degrees. At this temperature, they must work without losing their magnetization power. As a non-limiting example, for a MTU model 396 engine, twelve magnets are placed on the cooling duct; the magnets have the following dimensions: 9 centimeters length, 3.5 centimeters width and 2 centimeters thickness.
6) The sixth device is entirely analogous to the fourth device, only that in this case the magnets 16 are directly installed around the fuel filter 31 connected to the internal combustion engine. Also in this case, the sign induced in the fuel fed to the engine, independent of whether this is positive or negative, must be analogous to the sign induced in the preceding fuel treatment systems and opposite the sign conferred to the air fed to the engine. The number of magnets 16 present on the fuel filter approximately ranges from 5 to 14, and is preferably equal to 10 for a MTU type 396 diesel engine. The size of said magnets 16 is approximately equal to 10 centimeters length, 3 centimeters width and 2.5 centimeters thickness. The shape of the magnets 16 is roughly concave in order to better adhere to the fuel filter 31 on which they are installed. Said magnets 16 have a density of the minimum magnetic field of about 1.17 Tesla. The number of magnets 16 present on the fuel filter 31 varies as a function of engine power; the number approximately ranges from 5 to 20 and is preferably equal to 10. The temperature that the magnets must support is also taken under consideration: such temperature must be equal to at least 110 degrees or higher, without the magnets losing their magnetization power.

All the magnets placed on the fuel ducts and the air ducts can be shielded with a protected layer of at least 1 millimeter, in order to decrease the dispersion and increase the efficiency of the system, and better tighten the magnets on the fuel, cooling and air ducts.

Alternatively, it is also possible to magnetize the fuel before it is introduced inside the tank 2, in a manner so as to improve its quality and fluidity, simultaneously decreasing its density. The magnetization process, object of the present invention, tends to improve the quality of the fuel by decreasing the asphaltenes and the carbon residues dissolved therein, charge the fuel and the air fed to the engine with opposite signs, and disperse at the molecular level the carbon chains and the molecular aggregates present in the fuel itself. Naturally, the method described in the present industrial patent application tends to be more effective the more the fuel is treated. The results attained demonstrate that by employing the aforesaid technique, it is possible to obtain substantial savings in fuel consumption, even halving consumption expenses. In addition, by decreasing the viscosity of the fuel and improving its quality, one obtains an overall improvement of the engine efficiency, decreasing fuel consumption, increasing engine torque, and also reducing the engine's smokiness, harmful emissions and carbon encrustations in the combustion chamber. The encounter in the combustion chamber, of the engine treated according to the technique described in the present invention, between the fuel that is molecularly and qualitatively treated and charged with a sign and the air charged with the opposite sign, facilitates the creation of an ideal air-fuel mixture. An optimal mixture of course supplies an optimal combustion, considerably improving the overall efficiency of the internal combustion engine on which said apparatus is installed. The apparatus that is the object of the present invention is installable on any one internal combustion engine, independent of whether it is fed with diesel gas, unleaded gas, LPG, methane, kerosene, oil, alcohol or any other combustible liquid or gas. Naturally, the efficiency and performance of the engine, on which the integrated system is installed, vary as a function of the fuel employed; that described above is referred to a theoretical installation, subject to be modified if the engine is larger or smaller than a marine engine of average size (MTU 396), to which reference is generically made during the description.

For an engine (MTU 396), at least 220 hours of functioning with the integrated system are necessary in order to show the benefits of the system and begin to evaluate the efficiency thereof; its optimization is obtained after another 200 hours of functioning.

Indeed, the first few hours serve to magnetize the engine and clean the combustion chambers, while in the subsequent hours the performance is stabilized and optimized. The magnetization method that is the object of the present invention does not cause any damage to the internal combustion engines on which it is installed, and it even increases the operating life of such engines over time.

As a non-limiting example, the following results were currently obtained on a MTU type 396 diesel engine, fed with diesel gas with the integrated system illustrated in the patent application.

Initially, in the tests carried out in 2008, a fuel savings of 7% was achieved. Then, due to the subsequent calibrations of the device, a savings of 66% was reached in 2011.

The system was also installed on a second MTU type 396 engine, and the same operating results were achieved along with analogous consumption decreases.

## Claims

1. A method for treating the air-fuel mixture to feed to any one internal combustion engine, **characterized by** the following magnetization steps:
a) magnetization and treatment of the fuel present inside any one tank (2) due to at least one immersion container (1), equipped with a plurality of holes (40) placed in proximity to the fuel duct (8) and containing at least one cylindrical container (3), equipped with a plurality of holes (41), in turn adapted to contain a plurality of magnetic elements (5) spaced from each other by the same number of ceramic spacers (6);
b) transfer of the treated fuel of the tank (2), by means of the fuel duct (8), into a passage container (9) containing a sequence of curves (12) made by the aforesaid fuel duct (8), said duct (8) being equipped with at least one pair of magnets (10) adapted to polarize the fuel with an electric charge with the same sign as that which will be produced by the magnetization following the subsequent passages of the fuel in the system;
c) introduction of the fuel treated in devices a and b, via the duct (8), into at least one fuel filter (31) in turn magnetized due to at least one pair of magnets (16) placed directly on said fuel filter (31) and capable of creating a charge with sign analogous to that of steps a and b;
d) exit of the fuel duct (8) from the fuel filter and further magnetization of the fuel present in the fuel duct (8) due to at least one pair of magnets (14) placed directly in contact with said fuel duct (8) and situated in proximity to the system for injecting said fuel into the combustion chamber, having sign analogous to that induced in devices b, c;
e) magnetization of the water and/or of the liquid for cooling the engine due to at least one pair of magnets (16) placed directly on the tube of the cooling water (20) and capable of creating a charge with sign analogous to that induced in devices b, c, d;
f) magnetization of the air fed to the internal combustion engine due to at least one pair of magnets (16), placed on the suction duct (17) in proximity to the engine and adapted to provide the air fed to the engine with a charge with sign opposite that provided to the fuel fed to the engine by means of devices b, c, d;
g) mixing in the combustion chamber of any one internal combustion engine, of the fuel as treated in devices a, b, c, d with the air charged with opposite sign according to device f.

2. Method for treating the air-fuel mixture according to claim 1, wherein the magnetic field created by said magnets ranges from 0.4 Tesla to 1.49 Tesla, and preferably is 1.25 Tesla.

3. Method for treating the air-fuel mixture according to the preceding claims, wherein the magnets are made with ferromagnetic and/or paramagnetic elements, rare earth elements and especially the rare earth elements of neodymium and samarium cobalt.

4. Method according to the preceding claims, wherein the concave magnets can be integrated with rings of neodymium, ferrite and samarium cobalt.

5. Method according to all the preceding claims, wherein the duct (8) is fed by a plurality of tanks (2) treated according to the method of the present invention.

6. Method according to claim 5, wherein the tanks (2) can be in sequence.

7. Method according to claim 1, wherein the actuation steps are: a, b, d, e and f.

8. Method according to claim 1, wherein the actuation steps are: a, b, d and f.

9. Method according to claim 1, wherein the actuation steps are: a and f.

10. Method according to the preceding claims, wherein the permanent magnetic elements of the devices b, c, d, e and f can be externally shielded with any one insulating polymer, metal or alloy that is at least one millimeter thick.

## Patentansprüche

1. Eine Methode zur Behandlung der Luft-Kraftstoffmischung zur Einspeisung in eine beliebige Verbrennungsmaschine, **gekennzeichnet durch** die folgenden Magnetisierungsschritte:
a) Magnetisierung und Behandlung des Kraftstoffs in einem beliebigen Tank (2) **durch** mindestens einen Tauchbehälter (1), ausgestattet mit einer Vielzahl von Löchern (40), die in der Nähe des Kraftstoffrohrs (8) angeordnet sind, und umfassend mindestens einen zylindrischen Behälter (3), ausgestattet mit einer Vielzahl von Löchern (41), der wiederum eine Vielzahl magnetischer Elemente (5) umfasst, die voneinander **durch** dieselbe Anzahl keramischer Abstandhalter (6) getrennt sind;
b) Transfer des behandelten Kraftstoffs aus dem Tank (2) mittels des Kraftstoffrohrs (8) in einen Durchgangsbehälter (9), der eine Reihe von Kurven (12) umfasst, die aus dem o. g. Kraftstoffrohr (8) hergestellt sind, wobei das genannten Rohr (8) mit mindestens einem Paar von Magneten (10) ausgestattet ist, die so eingerichtet sind, dass sie den Kraftstoff mit einer elektrischen Ladung polarisieren, mit demselben Vorzeichen wie das, welches **durch** die Magnetisierung im Anschluss an die nachfolgenden Durchgänge des Kraftstoffs in dem System erzeugt wird;
c) Einleitung des Kraftstoffes, der in den Vorrichtungen a und b behandelt wurde, über das Rohr (8) in mindestens einen Kraftstofffilter (31), der wiederum **durch** mindestens ein Paar von Magneten (16) magnetisiert wird, welche direkt auf dem genannten Kraftstofffilter (31) platziert und in der Lage sind, eine Ladung mit Vorzeichen zu erzeugen, die denen der Schritte a und b analog sind;
d) Abgang des Kraftstoffrohrs (8) von dem Kraftstofffilter und weitere Magnetisierung des in dem Kraftstoffrohr (8) vorhandenen Kraftstoffs **durch** mindestens ein Paar von Magneten (14), welche in direktem Kontakt mit dem genannten Kraftstoffrohr (8) angeordnet sind und in der Nähe des Systems zum Einspritzen des genannten Kraftstoffs in den Verbrennungsraum liegen, mit einem Vorzeichen, das zu dem in den Vorrichtungen b, c induzierten analog ist;
e) Magnetisierung des Wassers und/oder der Flüssigkeit zum Kühlen des Motors durch mindestens ein Paar von Magneten (16), welche direkt auf dem Kühlwasserrohr (20) platziert sind und eine Ladung erzeugen können, deren Vorzeichen analog zu dem in den Vorrichtungen b, c, d induzierten ist;
f) Magnetisierung der in den Verbrennungsmotor eingespeisten Luft **durch** mindestens ein Paar von Magneten (16), die auf dem Ansaugrohr (17) in Nähe zum Motor platziert und so eingerichtet sind, dass sie die in den Motor eingespeiste Luft mit einem Vorzeichen entgegengesetzt zu dem des Kraftstoffs laden, der in den Motor mittels der Vorrichtungen b, c, d eingespeist wird;
g) Mischen des in den Vorrichtungen a, b, c, d behandelten Kraftstoffs im Verbrennungsraum eines beliebigen Verbrennungsmotors mit der Luft, welche die entgegengesetzte Ladung gemäß Vorrichtung f hat.

2. Methode zur Behandlung der Luft-Kraftstoffmischung gemäß Anspruch 1, bei der das magnetische Feld, das von den genannten Magneten erzeugt wird, von 0,4 Tesla bis 1,49 Tesla reicht und vorzugsweise 1,25 Tesla beträgt.

3. Methode zur Behandlung der Luft-Kraftstoffmischung gemäß den vorangehenden Ansprüchen, bei der die Magnete mit ferromagnetischen und/oder paramagnetischen Elementen, Seltenerdelementen und insbesondere den Seltenerdelementen Neodym und Samariumkobalt hergestellt sind.

4. Methode nach den vorangehenden Ansprüchen, bei der die konkaven Magnete mit Ringen aus Neodym, Ferrit und Samariumkobalt aus einem Stück hergestellt werden können.

5. Methode nach allen vorangehenden Ansprüchen, bei der das Rohr (8) aus einer Vielzahl von Tanks (2) gespeist wird, die entsprechend der Methode der vorliegenden Erfindung behandelt werden.

6. Methode nach Anspruch 5, bei der die Tanks (2) hintereinander angeordnet sein können.

7. Methode nach Anspruch 1, bei der die Betätigungsschritte wie folgt sind: a, b, d, e und f.

8. Methode nach Anspruch 1, bei der die Betätigungsschritte wie folgt sind: a, b, d und f.

9. Methode nach Anspruch 1, bei der die Betätigungsschritte wie folgt sind: a und f.

10. Methode nach den vorangehenden Ansprüchen, bei der die dauerhaft magnetischen Elemente der Vorrichtungen b, c, d, e und f außen mit einer Abschirmung aus isolierendem Polymer, Metall oder einer Legierung versehen sein können, die mindestens einen Millimeter dick ist.

## Revendications

1. Procédé pour traiter le mélange air-carburant pour alimenter un moteur à combustion interne quelconque, **caractérisé par** les étapes d'aimantation suivantes :
a) aimantation et traitement du carburant présent dans un réservoir quelconque (2) à l'aide d'au moins un récipient d'immersion (1), pourvu de plusieurs orifices (40), placé à proximité du conduit de carburant (8) et contenant au moins un récipient cylindrique (3), pourvu de plusieurs orifices (41), lui-même apte à contenir plusieurs éléments magnétiques (5) espacés les uns des autres par le même nombre de pièces d'espacement en céramique (6) ;
b) transfert du carburant traité du réservoir (2), à l'aide du conduit de carburant (8), dans un récipient de passage (9) contenant une succession de courbes (12) décrites par le conduit de carburant (8) mentionné, ledit conduit (8) étant pourvu d'au moins une paire d'aimants (10) aptes à polariser le carburant avec une charge électrique du même signe que celle qui sera produite par l'aimantation à la suite des passages ultérieurs du carburant dans le système ;
c) introduction du carburant traité dans des dispositifs a et b, par l'intermédiaire du conduit (8), dans au moins un filtre de carburant (31) qui est lui-même aimanté à l'aide d'au moins une paire d'aimants (16) placés directement sur ledit filtre de carburant (31) et aptes à créer une charge d'un signe analogue à celui des étapes a et b ;
d) sortie du conduit de carburant (8) du filtre de carburant et aimantation supplémentaire du carburant présent dans ledit conduit de carburant (8) grâce à au moins une paire d'aimants (14) placés directement en contact avec le conduit de carburant (8) et situés à proximité du système pour injecter le carburant dans la chambre de combustion, qui présente un signe analogue à celui induit dans les dispositifs b, c ;
e) aimantation de l'eau et/ou du liquide pour refroidir le moteur, à l'aide d'au moins une paire d'aimants (16) placés directement sur le tube de l'eau de refroidissement (20) et aptes à créer une charge de signe analogue à celui induit dans les dispositifs b, c, d ;
f) aimantation de l'air amené dans le moteur à combustion interne, à l'aide d'au moins une paire d'aimants (16) placés sur le conduit d'aspiration (17) à proximité du moteur et aptes à doter l'air amené dans le moteur d'une charge d'un signe opposé à celui fourni au carburant amené dans le moteur à l'aide des dispositifs b, c, d ;
g) mélange, dans la chambre de combustion d'un moteur à combustion interne quelconque, du carburant tel qu'il est traité dans les dispositifs a, b, c, d avec l'air chargé avec un signe opposé selon le dispositif f.

2. Procédé pour traiter le mélange air-carburant selon la revendication 1, selon lequel le champ magnétique créé par les aimants va de 0,4 tesla à 1,49 tesla, et est de préférence de 1,25 tesla.

3. Procédé pour traiter le mélange air-carburant selon les revendications précédentes, selon lequel les aimants se composent d'éléments ferromagnétiques et/ou paramagnétiques, d'éléments en terres rares et spécialement les éléments en terres rares de néodyme et samarium-cobalt.

4. Procédé selon les revendications précédentes, selon lequel les aimants concaves peuvent être intégrés à des anneaux de néodyme, ferrite et samarium cobalt.

5. Procédé selon toutes les revendications précédentes, selon lequel le conduit (8) est alimenté par plusieurs réservoirs (2) traités selon le procédé de la présente invention.

6. Procédé selon la revendication 5, selon lequel les réservoirs (2) peuvent être placés les uns à la suite des autres.

7. Procédé selon la revendication 1, selon lequel les étapes de mise en action sont : a, b, d, e et f.

8. Procédé selon la revendication 1, selon lequel les étapes de mise en action sont : a, b, d et f.

9. Procédé selon la revendication 1, selon lequel les étapes de mise en action sont : a et f.

10. Procédé selon les revendications précédentes, selon lequel les éléments magnétiques permanents des dispositifs b, c, d, e et f peuvent être protégés extérieurement avec n'importe quel polymère, métal ou alliage isolant d'au moins un millimètre d'épaisseur.
